(19)

Europäisches
Patentamt
European
Patent Office
Office européen
des brevets

(11) **EP 4 675 491 A1**

(12) **EUROPEAN PATENT APPLICATION**

(43) Date of publication:
**07.01.2026 Bulletin 2026/02**

(21) Application number: **25186905.3**

(22) Date of filing: **02.07.2025**

(51) International Patent Classification (IPC):
**G06F 30/28** (2020.01)  **E21B 43/00** (2006.01)
**E21B 49/00** (2006.01)  **G06F 30/23** (2020.01)
**G06F 111/10** (2020.01)  **G06F 113/08** (2020.01)

(52) Cooperative Patent Classification (CPC):
**G06F 30/28; E21B 43/00; E21B 49/00; G06F 30/23;**
G06F 2111/10; G06F 2113/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.07.2024 US 202463667189 P**
**27.06.2025 US 202519253039**

(71) Applicant: **Dassault Systemes Americas Corp.**
**Waltham, MA 02451 (US)**

(72) Inventors:
• **OTOMO, Hiroshi**
**Waltham, MA 02451 (US)**
• **YANG, Jingjing**
**Waltham, MA 02451 (US)**

• **FAN, Hongli**
**Waltham, MA 02451 (US)**
• **SUN, Guangyuan**
**San Francisco, CA 94104 (US)**
• **SALAZAR-TIO, Rafael**
**San Francisco, CA 94104 (US)**
• **BALASUBRAMANIAN, Ganapathi Raman**
**San Francisco, CA 94104 (US)**
• **ISLAM, Ashraful**
**San Francisco, CA 94104 (US)**
• **CROUSE, Bernd**
**San Francisco, CA 94104 (US)**
• **ZHANG, Raoyang**
**Waltham, MA 02451 (US)**

(74) Representative: **Fish & Richardson P.C.**
**Highlight Business Towers**
**Mies-van-der-Rohe-Straße 8**
**80807 München (DE)**

(54) **COMPUTER SYSTEM FOR DIGITALLY SIMULATING MULTI-SCALE FLUID FLOWS IN A COMPUTER-AIDED DESIGN MODEL**

(57)     Systems and methods for digitally simulating a multi-scale fluid flow in a three-dimensional computer-aided design (CAD) model of a simulation space include digitally simulating movement of a fluid interface through a digital representation of a porous medium including a mesh including voxels, the fluid interface representing a separation between a first fluid and a second fluid; and digitally simulating residual amounts of the first fluid and the second fluid in pore structures in the porous medium by determining a first capillary pressure and a second capillary pressure for the porous medium; determining values for voxels in the mesh representing locations in the porous medium associated with the pore structures, the values being based on the first and second capillary pressures and porosity values for the locations in the porous medium; and determining the residual amounts of the first fluid and the second fluid at the voxels based on the values.

FIG. 1

**Description**

**CROSS-REFERENCE TO RELATED APPLICATIONS**

This application claims the benefit under 35 U.S.C. § 119(e) of priority to U.S. Provisional Application No. 63/667,189, filed on July 3, 2024, the contents of which are hereby incorporated by reference.

**BACKGROUND**

This description relates to simulating multiphase or multi-component fluid flows at multiple scales.
Multiphase or multi-component fluid flows through porous media are important in many industrial applications including, for example, Enhanced Oil Recovery (EOR) and personal protective equipment (PPE). The porous media can involve highly random and complex geometry such as a pore space network. In order to achieve accurate simulation results for multiphase flow in the porous media, it is important to capture relevant data from all scales of the porous media. Porous media can include a range of scales across many orders of magnitude in size. For example, in a hydrocarbon reservoir the scales can range from pores in the reservoir rock that have sizes in the nanometer range to the size of the reservoir itself which is tens or hundreds of kilometers in size. The full range of scales can influence hydrocarbon storage and production.

**SUMMARY**

This disclosure describes an approach for digitally simulating a multi-scale fluid flow. This approach enables accurate digital simulations of fluid flow in a porous medium without requiring a digital representation of the porous medium to fully resolve the smallest scales of the porous medium. Fully scale-resolved fluid flow simulations of a porous medium can be computationally prohibitive in terms of both data size and computational resources. This approach, therefore, results in digital fluid flow simulations with reduced computational complexity and requiring fewer computational resources than a fully scale resolved simulation. This approach can be implemented on a data processing system such as a computer system. The data processing system can access a digital mesh that is a digital representation of the porous medium based on a digital three-dimensional (3D) computer aided design (CAD) model of the porous medium. The data processing system can digitally simulate residual amounts of a first fluid in one or more pore structures in the porous medium. The residual amounts of fluid can result from, for example and not by way of limitation, oil trapped in a pore structure that has a size that is smaller than a voxel size of the digital mesh after water has flooded the porous medium. The data processing system can determine the residual amounts of fluids based on one or more capillary pressures and porosity values associated with one or more locations in the digital representation of the porous medium.

In an example implementation, a computer system for digitally simulating a multi-scale fluid flow in a three-dimensional computer-aided design (CAD) model of a simulation space includes one or more processors; and a memory including a mesh preparation engine for generating and storing a digital representation of a porous medium based on a digital three-dimensional CAD model, the digital representation including a mesh comprising a plurality of voxels; and a simulation engine for reading, from the mesh preparation engine, the digital representation of the mesh in the simulation space. The simulation engine is configured to store instructions for digitally simulating a fluid flow in the porous medium. The instructions, when executed by the one or more processors, cause the one or more processors to perform operations including reading, from the mesh preparation engine, the digital representation of the mesh in the simulation space; digitally simulating movement of a fluid interface through the mesh representing the porous medium, the fluid interface representing a separation between a first fluid and a second fluid; and digitally simulating one or more residual amounts of the first fluid and the second fluid in one or more pore structures in the porous medium. The digitally simulating one or more residual amounts of the first fluid and the second fluid includes determining a first capillary pressure and a second capillary pressure for the porous medium; determining one or more values for one or more voxels in the mesh representing one or more locations in the porous medium associated with the one or more pore structures, the one or more values being based on the first and second capillary pressures and one or more porosity values for the one or more locations in the porous medium associated with the one or more pore structures; and determining the one or more residual amounts of the first fluid and the second fluid at the one or more voxels based on the one or more values.

In an aspect combinable with the example implementation, the one or more pore structures include one or more pores in the porous medium with a size smaller than a size of a voxel.

In another aspect combinable with one, some, or all of the previous aspects, the determining the one or more values for the one or more voxels in the mesh includes using a constitutive relationship between capillary pressure and fluid saturation that uses the porosity values.

In another aspect combinable with one, some, or all of the previous aspects, the constitutive relationship is scaled using a similarity of a Leverett J-function.

In another aspect combinable with one, some, or all of the previous aspects, the operations include reducing surface tension forces between the first fluid and the second fluid represented by the one or more voxels in the mesh by applying a counteracting body force to the one or more voxels based on properties of the first fluid and the second fluid.

In another aspect combinable with one, some, or all of the previous aspects, the properties of the second fluid comprise an average density and a maximum density between the first fluid and the second fluid.

In another aspect combinable with one, some, or all of the previous aspects, the operations include digitally simulating the fluid flow in the one or more pore structures of the porous medium by applying a resistance force to the one or more voxels that represent the one or more locations of the one or more pore structures in the porous medium.

In another aspect combinable with one, some, or all of the previous aspects, the resistance force is applied to the one or more voxels in a direction based on a permeability of the porous medium.

In another aspect combinable with one, some, or all of the previous aspects, the direction is determined for each voxel based on principal axes of a Hessian matrix of the porosity of the location in the porous medium represented by each voxel.

In another example implementation, a method for digitally simulating a multi-scale fluid flow in a three-dimensional computer-aided design (CAD) model of a simulation space includes reading, by a data processing system from a hardware storage device, a digital representation of a porous medium based on a digital three-dimensional CAD model, the digital representation including a mesh comprising a plurality of voxels; digitally simulating, by the data processing system, movement of a fluid interface through the mesh representing the porous medium, the fluid interface representing a separation between a first fluid and a second fluid; and digitally simulating, by the data processing system, one or more residual amounts of the first fluid and the second fluid in one or more pore structures in the porous medium. The digitally simulating, by the data processing system, one or more residual amounts of the first fluid and the second fluid includes determining, by the data processing system, a first capillary pressure and a second capillary pressure for the porous medium; determining, by the data processing system, one or more values for one or more voxels in the mesh representing one or more locations in the porous medium associated with the one or more pore structures, the one or more values being based on the first and second capillary pressures and one or more porosity values for the one or more locations in the porous medium associated with the one or more pore structures; and determining, by the data processing system, the one or more residual amounts of the first fluid and the second fluid at the one or more voxels based on the one or more values.

In an aspect combinable with the example implementation, the one or more pore structures includes one or more pores in the porous medium with a size smaller than a size of a voxel.

In another aspect combinable with one, some, or all of the previous aspects, the determining the one or more values for the one or more voxels in the mesh includes using a constitutive relationship between capillary pressure and fluid saturation that uses the porosity values.

In another aspect combinable with one, some, or all of the previous aspects, the constitutive relationship is scaled using a similarity of a Leverett J-function.

Another aspect combinable with one, some, or all of the previous aspects includes reducing surface tension forces between the first fluid and the second fluid represented by the one or more voxels in the mesh by applying a counteracting body force to the one or more voxels based on properties of the first fluid and the second fluid.

Another aspect combinable with one, some, or all of the previous aspects includes digitally simulating the fluid flow in the one or more pore structures of the porous medium by applying a resistance force to the one or more voxels that represent the one or more locations of the one or more pore structures in the porous medium, where the resistance force is applied to the one or more voxels in a direction based on a permeability of the porous medium.

In another aspect combinable with one, some, or all of the previous aspects, the direction is determined for each voxel based on principal axes of a Hessian matrix of the porosity of the location in the porous medium represented by each voxel.

In another example implementation, one or more non-transitory machine-readable storage devices store instructions for digitally simulating a multi-scale fluid flow in a three-dimensional computer-aided design (CAD) model of a simulation space. The instructions are executable by one or more processors, to cause performance of operations including reading, from a hardware storage device, a digital representation of a porous medium based on a digital three-dimensional CAD model, the digital representation including a mesh comprising a plurality of voxels; digitally simulating movement of a fluid interface through the mesh representing the porous medium, the fluid interface representing a separation between a first fluid and a second fluid; and digitally simulating one or more residual amounts of the first fluid and the second fluid in one or more pore structures in the porous medium. The digitally simulating one or more residual amounts of the first fluid and the second fluid includes determining a first capillary pressure and a second capillary pressure for the porous medium; determining one or more values for one or more voxels in the mesh representing one or more locations in the porous medium associated with the one or more pore structures, the one or more values being based on the first and second capillary pressures and one or more porosity values for the one or more locations in the porous medium associated with the one or more pore structures; and determining the one or more residual amounts of the first fluid and the second fluid at the one or more voxels based on the one or more values.

In an aspect combinable with the example implementation, the determining the one or more values for the one or more voxels in the mesh includes using a constitutive relationship between capillary pressure and fluid saturation that uses the porosity values.

In another aspect combinable with one, some, or all of the previous aspects, the operations include reducing surface tension forces between the first fluid and the second fluid represented by the one or more voxels in the mesh by applying a counteracting body force to the one or more voxels based on properties of the first fluid and the second fluid.

In another aspect combinable with one, some, or all of the previous aspects, the operations include digitally simulating the fluid flow in the one or more pore structures of the porous medium by applying a resistance force to the one or more voxels that represent the one or more locations of the one or more pore structures in the porous medium, where the resistance force is applied to the one or more voxels in a direction based on a permeability of the porous medium.

One or more of the above aspects may provide one or more of the advantages disclosed herein. The systems and methods described herein reduce computational complexity and computational resources necessary to digitally simulate multi-scale and multiphase fluid flow in a porous medium as compared with the computational complexity and resources necessary for a fully scale resolved simulation. The digital fluid flow simulations can simulate residual amounts of fluid that are trapped in pore structures that have a size smaller than a spatial resolution of the simulation. Detecting and simulating the residual amounts of fluid flow improves the accuracy of the digital fluid flow simulations as compared with other methods of simulating fluid flows in a porous medium with under-resolved pore structures in the simulation while being less expensive and easier to compute than fully scale resolved simulations. Fully scale resolved simulations can be cost-prohibitive because of the large range of scales in the simulation.

The systems and methods of this disclosure improve the accuracy of multi-scale and multi-component flow simulations by capturing the residual components trapped by under-resolved structures. The systems and methods of this disclosure further improve multi-scale and multi-component flow simulations by reducing excessive surface tension effects at under-resolved regions cause by, for example, the pseudo-potential model in the Lattice Boltzmann method. The systems and methods of this disclosure enable better simulations of heterogenous under-resolved structures by identifying the directionality of the under-resolved structures to apply a resistance force in the proper direction to prevent unphysical invasion of a fluid into the under-resolved pore structures.

Other features and advantages of this approach will be apparent from the following detailed description and from the claims.

## BRIEF DESCRIPTION OF THE DRAWINGS

FIG. 1 is a schematic representation of an example system for digital simulations of fluid flows.
FIG. 2 is a schematic illustration of a digital simulation of a fluid flow through a digital representation of a porous medium
FIGS. 3A and 3B are examples of porosity and fluid distribution in a digital representation of a porous medium.
FIG. 4 is a flow chart for an example method of digitally simulating a multi-scale fluid flow in a three-dimensional computer-aided design (CAD) model of a simulation space.
FIG. 5 is an example graph of capillary pressure versus water saturation for a porous medium with various porosity values.
FIG. 6 is an example computer-aided design model representing a porous medium.
FIGS. 7A-7H are visualizations generated by digital simulations of water invasion into a porous medium at different stages in time and with different simulation parameters.
FIG. 8 is a flow chart for an example method of digitally simulating a multi-scale fluid flow in a digital representation of a heterogeneous porous medium.
FIG. 9A is a schematic illustration of a simulation space for digitally simulating a multi-scale fluid flow.
FIGS. 9B and 9C are example visualizations generated by digital simulations of a fluid flow in the simulation space of FIG. 9A.

The details of one or more embodiments of the invention are set forth in the accompanying drawings and the description below. Other features, objects, and advantages of the invention are apparent from the description and drawings, and from the claims.

## DESCRIPTION

This disclosure describes an approach for digitally simulating a multi-scale fluid flow. This approach enables accurate digital simulations of fluid flow in a porous medium without requiring a digital representation of the porous medium that fully resolve the smallest scales of the porous medium. Fully scale-resolved fluid flow simulations of a porous medium can be computationally prohibitive in terms of both data size and computational resources enabling simulations that might not otherwise be practical or possible. This approach, therefore, results in digital fluid flow simulations with reduced computational complexity and requiring fewer computational resources than a fully scale resolved simulation. This approach can be implemented on a data processing system such as a computer system. The data processing system can access a digital mesh that is a digital representation of the porous medium based on a digital three-dimensional (3D) computer aided design (CAD) model of the porous medium. The data processing system can digitally simulate residual amounts of a first fluid in one or more pore structures in the porous medium. The residual amounts of fluid can result from, for example and not by way of limitation, oil trapped in a pore structure that has a size that is smaller than a voxel size of the digital mesh after water has flooded the porous medium. The data processing system can determine the residual amounts of fluids based on one or more capillary pressures and porosity values associated with one or more locations in the digital representation of the porous medium.

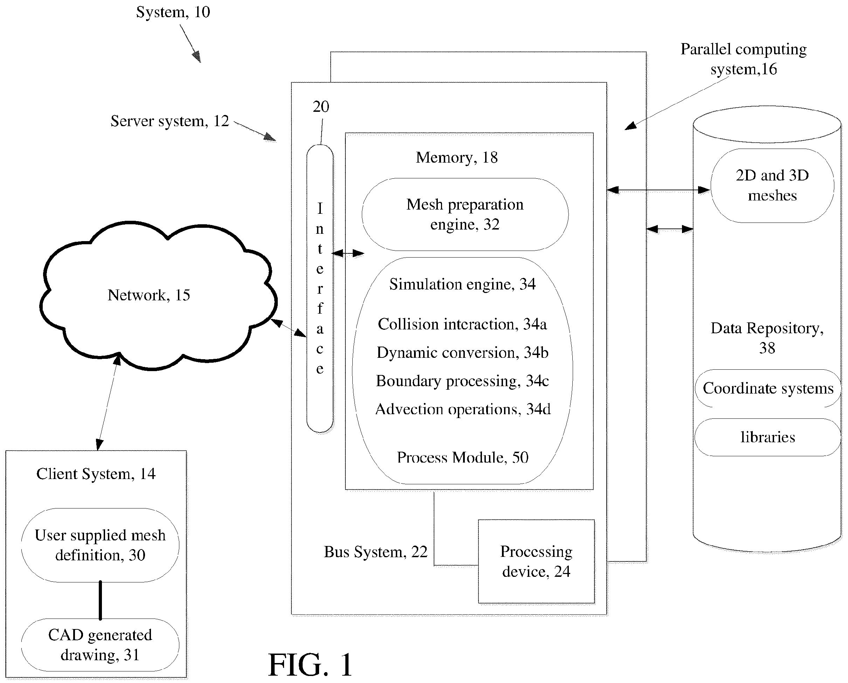

FIG. 1 illustrates a schematic of an example data processing system 10 that executes a multi-scale and multiphase digital fluid flow simulation in a digital representation of a simulation space. The system 10 in this implementation is based on a client-server or cloud-based architecture and includes a server system 12 implemented as a massively parallel computing system 16 (stand alone or cloud-based) and a client system 14 coupled via a network 15. The server system 12 includes memory 18, a bus system 22, interfaces 20 (e.g., user interfaces/network interfaces/display or monitor interfaces, etc.) and a processing device 24. In memory 18 are a mesh preparation engine 32 and a simulation engine 34.

While FIG. 1 shows mesh preparation engine 32 in memory 18, the mesh preparation engine can be a third-party application that is executed on a different system than server 12. Whether mesh preparation engine 32 executes in memory 18 or is executed on a different system than server 12, mesh preparation engine 32 receives a user-supplied mesh definition 30 based on CAD generated drawings 31 and then prepares a mesh and sends (and/or stores) the prepared mesh to simulation engine 34. The mesh is a digital representation of the porous medium and includes multiple voxels. The voxels form the computational cells for the fluid simulation. One approach to generating a digital representation of a porous medium is to obtain the representation from a 3D image generated from, for example, a micro CT scan of the rock sample, for example, as described in U.S. Patent 11,907,625, which is hereby incorporated by reference in its entirety.

One method for simulating fluid flows is the so-called Lattice Boltzmann Model (LBM). In an LBM-based physical process simulation system, fluid flow is represented by distribution function values, evaluated at a set of discrete velocities using the well-known Lattice Boltzmann equation that describes the time-evolution of the distribution function. The distribution function involves two processes, a streaming process and a collision process.

Simulation engine 34 includes collision interaction module 34a, which includes surface dynamics conversion 34b, boundary processing module 34c, and advection operations 34d. System 10 accesses data repository 38, which stores 2D and/or 3D meshes (Cartesian and/or curvilinear), coordinate systems, and libraries. For example, system 10 writes data to and reads data from data repository 38, including e.g., data representing a digital simulation of movement of a fluid interface through the mesh representing the porous medium, the fluid interface representing a separation between a first fluid and a second fluid; data representing a digital simulation of one or more residual amounts of the first fluid in one or more pore structures in the porous medium, data representing a first capillary pressure and a second capillary pressure for the porous medium; data representing one or more values for one or more voxels in the mesh representing one or more locations in the porous medium associated with the one or more pore structures, the one or more values being based on the first and second capillary pressures and one or more porosity values for the one or more locations in the porous medium associated with the one or more pore structures; and data representing the one or more residual amounts of the first fluid at the one or more voxels based on the one or more values, each of which may be read from and/or written to data repository 38 - as appropriate

Additional details on Lattice Boltzmann methods can be found in U.S. Patent 5,848,260 (the '260 patent) or U.S. Patent 11,847,391 (the '391 patent), both of which are hereby incorporated by reference in their entirety.

Although described with respect to an LBM-based physical process simulation, other computational fluid dynamics methods of simulating fluid flows can also be used. For example, finite-volume and finite-element methods can also be used to simulate the fluid flow in the porous medium.

The simulation engine 34 also include process module 50 that performs processing of multi-scale porous media having under-resolved regions. The process module 50 can simulate the original porous material having various sizes including under-resolved small scales, without the need to resolve all of the under-resolved small scales in the original porous material. The module 50 accounts for effects of the under-resolved small scales such as residual fluid behind a moving interface, surface tension forces, and flow resistance caused by the under-resolved small scales.

Fluid forces such as viscous and capillary forces from under-resolved pore structures in a porous medium can be modeled with reference to constitutive relationships such as permeability versus porosity, capillary pressure versus water saturation, or relative permeability versus water saturation. Although constitutive relationships help capture the fluid dynamics in homogenous under-resolved structures in the leading order, the detailed fluid behavior can deviate from reality by failing to capture residual amounts of fluid in structures that have a size less than a voxel size of the simulation, generating excessive surface tension forces, and failing to apply proper directionality to flow resistance caused by the under-resolved structures.

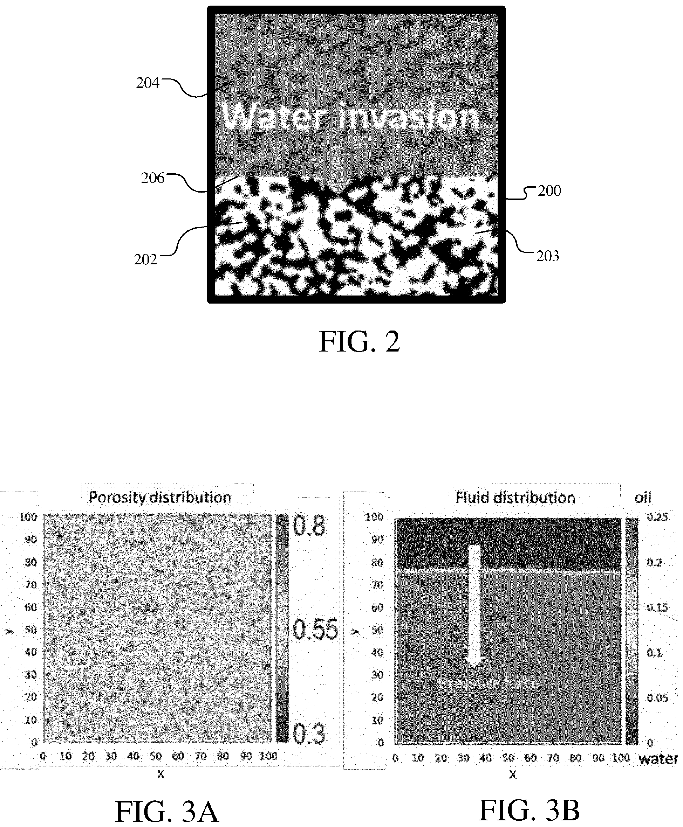

FIG. 2 is a schematic illustration of a digital simulation of a fluid interface moving through a porous medium. The computational cell 200 (e.g., a pixel or voxel) includes under-resolved pore structure 202. The under-resolved pore structure includes pores 203 that have a size that is smaller than the size of the computational cell 200. The spatial resolution of the mesh representing the porous medium in a fluid simulation is determined by the size or length of the computational cell 200. Water 204 is invading the computational cell 200 from the top down. Conventional simulations assume that the fluid interface 206 is flat during the invasion process when modeling the capillary force. This results in no component other than water being in the computational cell 200 behind the passing interface 206. While this assumption may be reasonable when the fluid solver is coupled with a diffusive interface model that does not allow resolution of the interface structure at finer scales than the cell size, this assumption fails to capture residual components of fluid behind the interface 206. In some cases, the residual amount can be accounted for separately through input constitutive relationships in an ordinary fluid solver that reflects the local structure information.

FIG. 3A shows a representation of a porosity distribution in a computational domain (e.g., a digital simulation space). FIG. 3B shows a representation of fluid distribution in the computational domain during the invasion process. The fluid interface is almost flat due to excessive surface tension effects in the computational cells of the computational domain.

Under certain geometric conditions, a digital model can generate excessive surface tension effects. In the multi-scale simulation, the surface tension effects come from the underlying multi-component flow solver and the multi-scale model. The multi-component flow solver contributes to the force across the computational cells and the multi-scale model contributes to force within an individual cell. As the local porosity decreases, the connectivity of pores between adjacent computational cells is likely to decrease. Consequently, the surface tension force from the multi-component flow solver should be mitigated. For example, FIG. 3B shows water intrusion through random porosity cells. Due to strong surface tension effects, the invasion occurs with a flat interface. The flat interface deviates from reality and the reduction of the surface tension force is required to improve accuracy. However, controlling the surface tension with a multi-component lattice Boltzmann solver is not trivial due to its effects on interface thickness and spurious current.

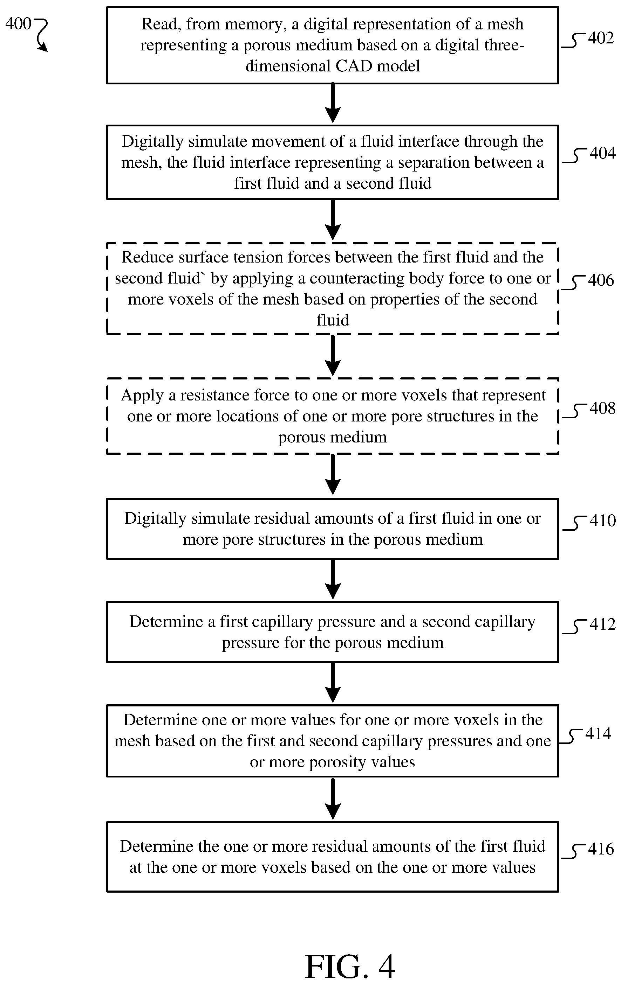

FIG. 4 is a flow chart for an example method 400 for digitally simulating a multi-scale fluid flow in a 3D CAD model of a simulation space. The method 400 can be implemented on a data processing system or computer system. For example, the method 400 can be implemented by the process module 50 in the simulation engine 34 of the system 10.

The data processing system reads 402 from memory a digital representation of a mesh in a simulation space. For example, the data processing system reads the mesh from the mesh preparation engine. In some implementations, the data processing system accesses the mesh from a data store such as a database or hardware storage device. The mesh can be a digital representation of a porous medium based on a digital 3D CAD model. The mesh includes a plurality of voxels. The porous medium can be heterogeneous. The mesh can include portions associated with pore structures in the porous medium that are under-resolved in the mesh.

The data processing system digitally simulates 404 movement of a fluid interface through the mesh representing the porous medium. The fluid interface represents a separation between a first fluid and a second fluid. For example, the fluid interface can represent a separation between oil and water or between a liquid and a gas. The two fluids can have different physical properties such as density, surface tension, viscosity, etc.

In some implementations, the data processing system reduces surface tension forces between the first fluid and the second fluid represented by the one or more voxels in the mesh by applying 406 a counteracting body force to the one or more voxels based on properties of the first fluid and the second fluid. For example, on top of a pseudo-potential model in the lattice Boltzmann method, the data processing system can add the counterforce to each fluid to reduce the existing surface tension force. Since the effects of surface tension are proportional to the curvature of the interface, the counteracting force can also be proportional. To minimize sub-effects on interface thickness and spurious currents, the terms can be formulated with the densities of the other fluid, as is the original body force in the pseudo-potential model. As a result, for example, the additional body force $\rho^\alpha \vec{g}_{surf}^\alpha$ for fluid $\alpha$ can be written as,

$$\rho^\alpha \vec{g}_{surf}^\alpha = \kappa(-\nabla \cdot \widehat{n^{\bar{\alpha}}}) \frac{\nabla \psi^\alpha}{\psi_{ave}} \frac{1}{\psi_{max}}$$

where $\rho^\alpha$ is the density of fluid $\alpha$, $\psi^\alpha = \rho^{\bar{\alpha}}$, $\kappa$ is a model parameter, $\widehat{n^{\bar{\alpha}}} = \frac{\nabla \psi^\alpha}{|\nabla \psi^\alpha|}$ and $\psi_{ave}$ and $\psi_{max}$ are the averaged and maximum density between fluids, respectively. Here $\bar{\alpha}$ denotes the fluid other than the fluid $\alpha$.

In some implementations, the data processing system digitally simulates 408 fluid flow in the one or more pore structures of the porous medium by applying a resistance force to the one or more voxels that represent the one or more locations of the one or more pore structures in the porous medium. The data processing system can apply the resistance force to the one or more voxels in a direction based on a permeability of the porous medium. The data processing system can determine the direction of the resistance force for each voxel based on principal axes of a Hessian matrix of the porosity of the location in the porous medium represented by each voxel.

When the strength of the fluid force from the multi-scale model is defined in a scalar form, the directionality of the under-resolved structure cannot be taken into account because the scalar has no direction. If the pore structure is homogeneous, then a scalar form can be suitable. Otherwise, this assumption limits the scope of multi-scale simulations. To better represent the directionality and strength of the fluid force, the fluid force can be represented in a tensorial form. The data processing system can rotate the tensor to a proper direction based on the local structure information for the pore structure. Specifically, by calculating the gradient and Hessian for local porosities, a principal axis direction of the fluid force strength, the principal resistivity direction, can be determined. The input resistance force in tensorial form can then be rotated to have a consistent direction with the determined direction.

The resistance force $\rho^\alpha \vec{g}_{resis}^\alpha$ which mimics the viscous force from under-resolved pore structures can be formulated as,

$$\rho^\alpha \vec{g}_{resis}^\alpha = R_{ij} \rho^\alpha u_j$$

where $u_j$ is the fluid velocity and $R_{ij}$ is the tensorial resistivity defined as

$$R_{ij} = \frac{\nu}{K_{ij}}$$

where v is the kinematic viscosity and $K_{ij}$ is the permeability tensor. Because the permeability tensor is symmetric and positive-definite, it can be diagonalized as

$$K_{ij} = A_{il} K_{lm}^D A_{mj}^{-1},$$

where $K_{lm}^D$ is the diagonal matrix, which is the input. A matrix $A_{ij}$ is constructed by eigenvectors $v_i$ of the Hessian matrix $\frac{\partial^2 \varphi}{\partial x_i \partial x_j}$ for local porosity $\varphi$. The local porosity is the porosity of the porous material at the location of the under-resolved pore structure. The local porosity can change throughout the porous medium. If some of the three eigenvalues of the Hessian matrix are closed or the calculation suffers from discretization inaccuracies, the computed gradient $\frac{\partial \varphi}{\partial x_i}$ can be used as guidance for the directionality of the resistance force.

The data processing system digitally simulates 410 one or more residual amounts of the first fluid and the second fluid in one or more pore structures in the porous medium. The one or more pore structures can be, for example, one or more pores in the porous medium that have a size smaller than a size of a voxel of the plurality of voxels in the mesh.

To digitally simulate 410 the one or more residual amounts of the first fluid and the second fluid, the data processing system determines 412 a first capillary pressure and a second capillary pressure for the porous medium. For example, the data processing system can determine a maximum and minimum capillary pressure for the porous medium.

The data processing system determines 414 one or more values for one or more voxels in the mesh representing one or more locations in the porous medium associated with the one or more pore structures. The pores that are smaller than a voxel can be represented by a single sample (e.g., by a value associated with a voxel) because the pores within the voxel have the same pore structure type. The one or more values are based on the first and second capillary pressures and one or more porosity values for the one or more locations in the porous medium associated with the one or more pore structures. The data processing system can use a constitutive relationship to determine the one or more values. For example, the data processing system can use a relationship between the capillary pressure and fluid saturation. The relationship can be scaled based on the local porosity in the porous medium using, for example, a Leverett J-function.

The data processing system determines 416 the one or more residual amounts of the first fluid at the one or more voxels based on the one or more values. For example, the data processing system can determine the residual amounts of fluid based on the determined water saturation that is based on the capillary pressure and local porosity.

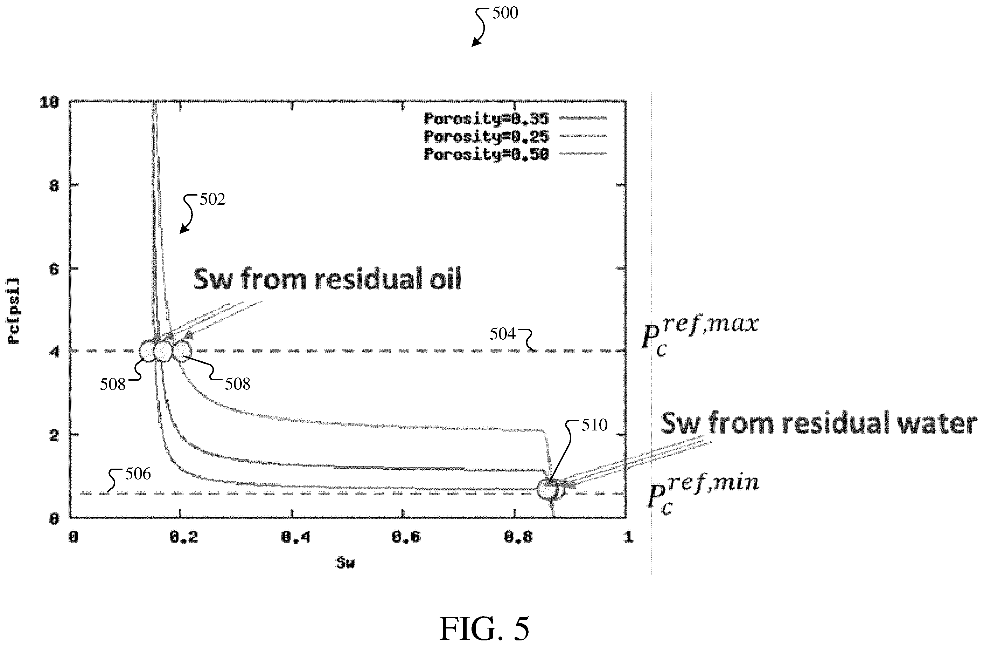

FIG. 5 is a plot 500 of example constitutive relationships 502 between water saturation value (Sw) and capillary pressure (Pc). The reference maximum and minimum capillary pressure forces are denoted as $P_c^{ref,max}$ 504 and $P_c^{ref,min}$ 506. According to $P_c^{ref,max}$ and $P_c^{ref,min}$, the water saturation values are determined. Where the constitutive relationships 502 cross the $P_c^{ref,max}$ 504 line indicates water saturation values 508 from residual oil. Where the constitutive relationships 502 cross the $P_c^{ref,min}$ 506 indicates water saturation values 510 from residual water. Here, the constitutive relationships 502, the capillary pressure curves $P_c$, are scaled using the similarity of the Leverett J-function,

$$J = \frac{P_c \sqrt{K_0/\varphi}}{\sigma \cdot cos\theta}$$

where $K_0$ is permeability, $\varphi$ is the porosity, $\sigma$ is the surface tension, and $\theta$ is the contact angle. Namely for a site having porosity $\varphi$, $P_c$ is scaled as,

$$P_c = P_c^{smpl} \sqrt{\frac{K_0(\varphi_{smpl})}{\varphi_{smpl}}} \sqrt{\frac{\varphi}{K_0(\varphi)}}$$

from $P_c^{smpl}$ using the input sampled porosity $\varphi_{smpl}$. In this way, the $P_c$ curves reflect the local porosity information and therefore the detected residual water saturation also varies depending on the local porosity. Scaling the constitutive relationships in this way allows for non-smooth voxel-to-voxel (e.g., cell-to-cell) water saturation variation.

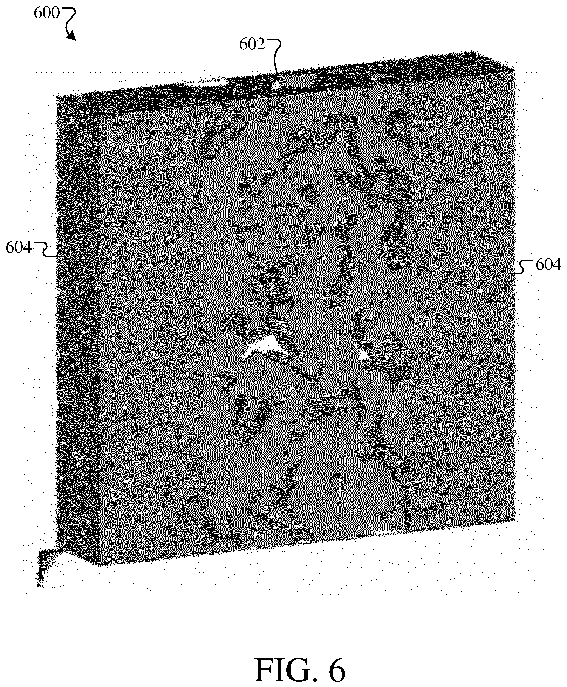

FIG. 6 shows an example visualization of a digital representation of a porous medium 600. The porous medium 600 is a rock sample. The grain structure of the rock sample includes resolved large pores 602 sandwiched by fine pore structure 604 on both sides. The fine pore structures 604 are under-resolved in the simulation and are therefore handled by the multi-scale model using the local porosity.

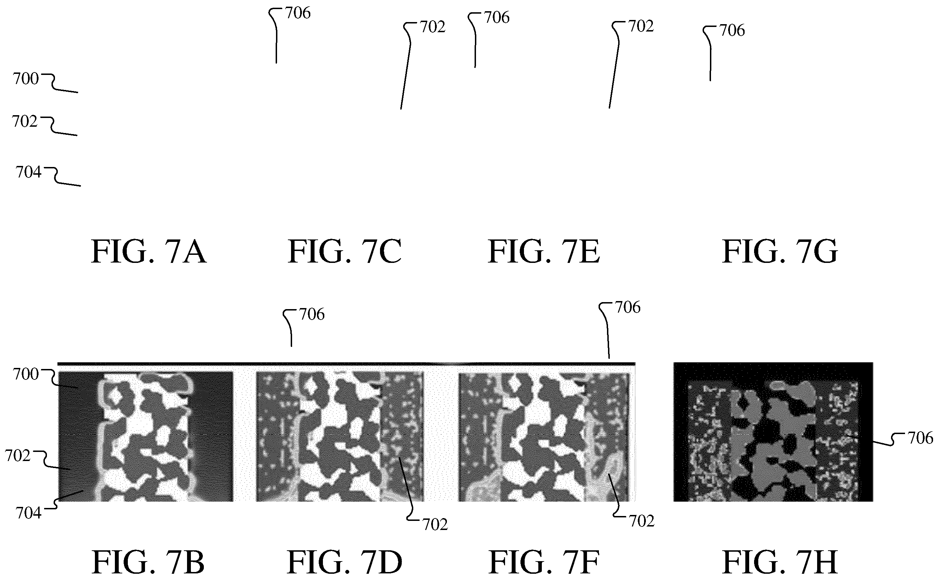

FIGS. 7A-7H show visualizations of results from digital fluid flow simulations in the digital representation of the porous medium 600. Results are shown at two different times. At the start of the simulation, oil occupies the entire domain, and water enters from the upper boundary with the pressure force. FIGS. 7A and 7B show visualizations for a simulation of the fluid flow that does not include mitigations to account for the effects of the under-resolved pore structures. Using the original model, the water 700 invades the under-resolved region with an almost flat interface 702 and no oil 704 remains behind. FIGS. 7C and 7D show visualizations for a simulation that incorporates the method 400 to capture the residual oil 706 behind the passing main water interface 702. FIGS. 7E and 7F show visualizations for a simulation that includes reducing the surface tension effects from the under-resolved pore structures in addition to capturing the residual oil 706. The main water interface 702 shows wavy patterns during the invasion process. FIGS. 7G and 7H show visualizations of a much higher resolution simulation of fluid flow through the porous medium 600. The high resolution simulation has many more voxels than the under-resolved simulation. Consequently, the high resolution simulation requires more computational time and resources to simulate. The results shown in FIGS. 7C-7F that were simulated using the method 400 have better agreement with the high resolution simulation than the results from the original model shown in FIGS. 7A and 7B.

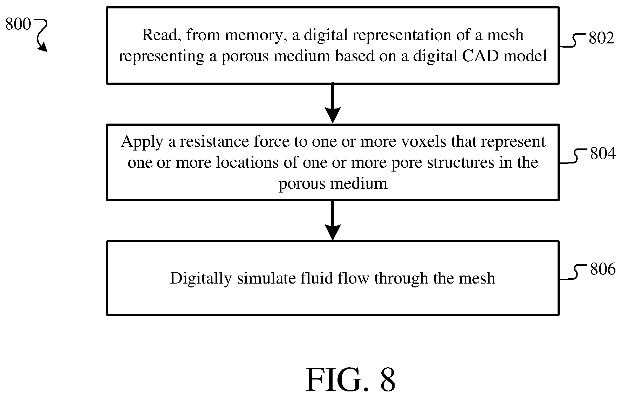

FIG. 8 is a flow chart for an example method 800 for simulating fluid flow in a heterogeneous porous medium. The method 800 can be implemented on a data processing system such as system 10. The method 800 can be performed by, for example, the simulation engine 34. The data processing system reads 802 from memory a digital representation of a mesh representing a porous medium based on a digital CAD model. The data processing system applies 804 a resistance force to one or more voxels in the representation of the porous medium that represent one or more locations of one or more pore structures. The one or more pore structures can be under-resolved by the mesh. The data processing system applies 804 the resistance force in substantially the same manner as applying 408 the resistance force in the method 400. The data processing system can apply the resistance force to the one or more voxels in a direction based on a permeability of the porous medium. The data processing system can determine the direction of the resistance force for each voxel based on principal axes of a Hessian matrix of the porosity of the location in the porous medium represented by each voxel. The data processing system digitally simulates 806 fluid flow through the mesh. While digitally simulating the fluid flow, the applied resistance force can inhibit fluid from flowing into areas of low porosity even if the pores are under-resolved and the porosity is heterogeneous.

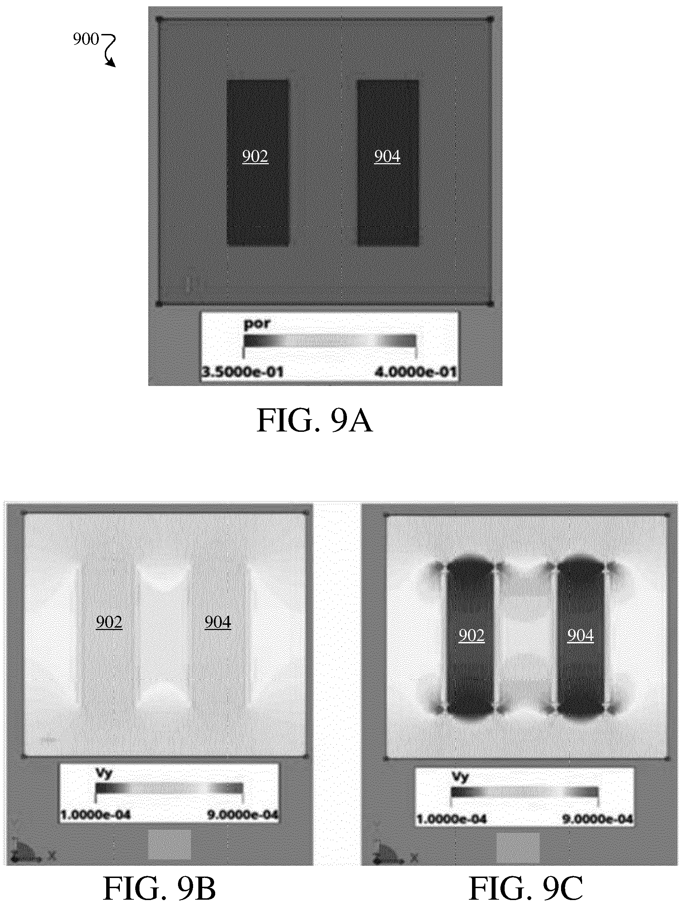

FIG. 9A is a schematic illustration of a simulation space 900 for digitally simulating a multi-scale fluid flow. The simulation space 900 is a two-dimensional under-resolved porous medium with low porosity regions 902, 904 in the middle of the simulation space 900.

FIGS. 9B and 9C are example visualizations generated by digital simulations of a fluid flow in the simulation space 900. A driving force was applied from top to bottom. In FIG. 9B, the resistance of the porous media was defined with a scalar value. In FIG. 9C, the resistance of the porous medium was defined with a tensorial form according to the method 800. For the tensorial form, a large resistance is assigned in one of three directions. As described in the method 800, the large resistivity direction is searched in each computational cell (pixel) by computing the Hessian for the porosity. As a result, the flow does not penetrate into the low-porosity regions 902, 904 with the tensorial resistivity as compared to the flow penetrating into the low porosity regions 902, 904 with the scalar resistivity.

Embodiments of the subject matter and the functional operations described in this specification can be implemented in digital electronic circuitry, tangibly embodied computer software or firmware, computer hardware (including the structures disclosed in this specification and their structural equivalents), or in combinations of one or more of them. Embodiments of the subject matter described in this specification can be implemented as one or more computer programs (i.e., one or more modules of computer program instructions encoded on a tangible non-transitory program carrier for execution by, or to control the operation of, data processing apparatus) generated and executed to perform the techniques described herein, including, e.g., the features of FIGS. 4 and 8. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example, a programmable processor, a computer, or multiple processors or computers. The apparatus can also be or further include special purpose logic circuitry (e.g., an FPGA (field programmable gate array) or an ASIC (application-specific integrated circuit)). In addition to hardware, the apparatus can optionally include code that produces an execution environment for computer programs (e.g., code that constitutes processor firmware, a protocol stack, a database management system, an operating system, or a combination of one or more of them).

A computer program, which can also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or another unit suitable for use in a computing environment. A computer program may, but need not, correspond to a file in a file system. A program can be stored in a portion of a file that holds other programs or data (e.g., one or more scripts stored in a markup language document, in a single file dedicated to the program in question, or in multiple coordinated files (e.g., files that store one or more modules, subprograms, or portions of code)). A computer program can be deployed so that the program is executed on one computer or on multiple computers that are located at one site or distributed across multiple sites and interconnected by a data communication network.

Computers suitable for the execution of a computer program can be based on general or special purpose microprocessors or both, or any other kind of central processing unit. Computer-readable media suitable for storing computer program instructions and data include all forms of non-volatile memory on media and memory devices, including by way of example semiconductor memory devices (e.g., EPROM, EEPROM, and flash memory devices), magnetic disks (e.g., internal hard disks or removable disks), magneto-optical disks, and CD-ROM and DVD-ROM disks. The processor and the memory can be supplemented by, or incorporated in, special purpose logic circuitry.

Embodiments of the subject matter described in this specification can be implemented in a computing system that includes a back-end component (e.g., as a data server), or that includes a middleware component (e.g., an application server), or that includes a front-end component (e.g., a client computer having a graphical user interface or a web browser through which a user can interact with an implementation of the subject matter described in this specification), or any combination of one or more such back-end, middleware, or front-end components. The components of the system can be interconnected by any form or medium of digital data communication (e.g., a communication network). Examples of communication networks include a local area network (LAN) and a wide area network (WAN) (e.g., the Internet).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a user device (e.g., for purposes of displaying data to and receiving user input from a user interacting with the user device), which acts as a client. Data generated at the user device (e.g., a result of the user interaction) can be received from the user device at the server.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing can be advantageous.

## EMBODIMENTS

Although the present invention is defined in the claims, it should be understood that the present invention can also (alternatively) be defined in accordance with the following embodiments:

1. A computer system for digitally simulating a multi-scale fluid flow in a three-dimensional computer-aided design (CAD) model of a simulation space, the computer system comprising:

one or more processors; and
a memory including:

a mesh preparation engine for generating and storing a digital representation of a porous medium based on a digital three-dimensional CAD model, the digital representation including a mesh comprising a plurality of voxels; and
a simulation engine for reading, from the mesh preparation engine, the digital representation of the mesh in the simulation space,

with the simulation engine configured to store instructions for digitally simulating a fluid flow in the porous medium, the instructions, when executed by the one or more processors, cause the one or more processors to perform operations comprising:

reading, from the mesh preparation engine, the digital representation of the mesh in the simulation space; digitally simulating movement of a fluid interface through the mesh representing the porous medium, the fluid interface representing a separation between a first fluid and a second fluid; and digitally simulating one or more residual amounts of the first fluid and the second fluid in one or more pore structures in the porous medium by:

determining a first capillary pressure and a second capillary pressure for the porous medium; determining one or more values for one or more voxels in the mesh representing one or more locations in the porous medium associated with the one or more pore structures, the one or more values being based on the first and second capillary pressures and one or more porosity values for the one or more locations in the porous medium associated with the one or more pore structures; and determining the one or more residual amounts of the first fluid and the second fluid at the one or more voxels based on the one or more values.

2. The system of embodiment 1, wherein the one or more pore structures comprise one or more pores in the porous medium with a size smaller than a size of a voxel.

3. The system of embodiment 1, wherein the determining the one or more values for the one or more voxels in the mesh comprises using a constitutive relationship between capillary pressure and fluid saturation that uses the porosity values.

4. The system of embodiment 3, wherein the constitutive relationship is scaled using a similarity of a Leverett J-function.

5. The system of embodiment 1, wherein the operations further comprise reducing surface tension forces between the first fluid and the second fluid represented by the one or more voxels in the mesh by applying a counteracting body force to the one or more voxels based on properties of the first fluid and the second fluid.

6. The system of embodiment 5, wherein the properties of the second fluid comprise an average density and a maximum density between the first fluid and the second fluid.

7. The system of embodiment 1, wherein the operations further comprise digitally simulating the fluid flow in the one or more pore structures of the porous medium by applying a resistance force to the one or more voxels that represent the one or more locations of the one or more pore structures in the porous medium.

8. The system of embodiment 7, wherein the resistance force is applied to the one or more voxels in a direction based on a permeability of the porous medium.

9. The system of embodiment 8, wherein the direction is determined for each voxel based on principal axes of a Hessian matrix of the porosity of the location in the porous medium represented by each voxel.

10. A method for digitally simulating a multi-scale fluid flow in a three-dimensional computer-aided design (CAD) model of a simulation space, the method comprising:

reading, by a data processing system from a hardware storage device, a digital representation of a porous medium based on a digital three-dimensional CAD model, the digital representation including a mesh comprising a plurality of voxels; digitally simulating, by the data processing system, movement of a fluid interface through the mesh representing the porous medium, the fluid interface representing a separation between a first fluid and a second fluid; and digitally simulating, by the data processing system, one or more residual amounts of the first fluid and the second fluid in one or more pore structures in the porous medium by:

determining, by the data processing system, a first capillary pressure and a second capillary pressure for the porous medium;

determining, by the data processing system, one or more values for one or more voxels in the mesh representing one or more locations in the porous medium associated with the one or more pore structures, the one or more values being based on the first and second capillary pressures and one or more porosity values for the one or more locations in the porous medium associated with the one or more pore structures; and determining, by the data processing system, the one or more residual amounts of the first fluid and the second fluid at the one or more voxels based on the one or more values.

11. The method of embodiment 10, wherein the one or more pore structures comprise one or more pores in the porous medium with a size smaller than a size of a voxel.

12. The method of embodiment 10, wherein the determining the one or more values for the one or more voxels in the mesh comprises using a constitutive relationship between capillary pressure and fluid saturation that uses the porosity values.

13. The method of embodiment 12, wherein the constitutive relationship is scaled using a similarity of a Leverett J-function.

14. The method of embodiment 10, further comprising reducing surface tension forces between the first fluid and the second fluid represented by the one or more voxels in the mesh by applying a counteracting body force to the one or more voxels based on properties of the first fluid and the second fluid.

15. The method of embodiment 10, further comprising:

reading digitally simulating the fluid flow in the one or more pore structures of the porous medium by applying a resistance force to the one or more voxels that represent the one or more locations of the one or more pore structures in the porous medium, wherein the resistance force is applied to the one or more voxels in a direction based on a permeability of the porous medium.

16. The method of embodiment 15, wherein the direction is determined for each voxel based on principal axes of a Hessian matrix of the porosity of the location in the porous medium represented by each voxel.

17. One or more non-transitory machine-readable storage devices storing instructions for digitally simulating a multi-scale fluid flow in a three-dimensional computer-aided design (CAD) model of a simulation space, the instructions being executable by one or more processors, to cause performance of operations comprising:

reading, from a hardware storage device, a digital representation of a porous medium based on a digital three-dimensional CAD model, the digital representation including a mesh comprising a plurality of voxels; digitally simulating movement of a fluid interface through the mesh representing the porous medium, the fluid interface representing a separation between a first fluid and a second fluid; and digitally simulating one or more residual amounts of the first fluid and the second fluid in one or more pore structures in the porous medium by:

determining a first capillary pressure and a second capillary pressure for the porous medium; determining one or more values for one or more voxels in the mesh representing one or more locations in the porous medium associated with the one or more pore structures, the one or more values being based on the first and second capillary pressures and one or more porosity values for the one or more locations in the porous medium associated with the one or more pore structures; and determining the one or more residual amounts of the first fluid and the second fluid at the one or more voxels based on the one or more values.

18. The one or more non-transitory machine-readable storage devices of embodiment 17, wherein the determining the one or more values for the one or more voxels in the mesh comprises using a constitutive relationship between capillary pressure and fluid saturation that uses the porosity values.

19. The one or more non-transitory machine-readable storage devices of embodiment 17, wherein the operations further comprise reducing surface tension forces between the first fluid and the second fluid represented by the one or more voxels in the mesh by applying a counteracting body force to the one or more voxels based on properties of the first fluid and the second fluid.

20. The one or more non-transitory machine-readable storage devices of embodiment 17, wherein the operations further comprise:

digitally simulating the fluid flow in the one or more pore structures of the porous medium by applying a resistance force to the one or more voxels that represent the one or more locations of the one or more pore structures in the porous medium,

wherein the resistance force is applied to the one or more voxels in a direction based on a permeability of the porous medium.

## Claims

1. A computer system for digitally simulating a multi-scale fluid flow in a three-dimensional computer-aided design (CAD) model of a simulation space, the computer system comprising:

   one or more processors; and
   a memory including:

   a mesh preparation engine for generating and storing a digital representation of a porous medium based on a digital three-dimensional CAD model, the digital representation including a mesh comprising a plurality of voxels; and
   a simulation engine for reading, from the mesh preparation engine, the digital representation of the mesh in the simulation space,
   with the simulation engine configured to store instructions for digitally simulating a fluid flow in the porous medium, the instructions, when executed by the one or more processors, cause the one or more processors to perform operations comprising:

   reading, from the mesh preparation engine, the digital representation of the mesh in the simulation space;
   digitally simulating movement of a fluid interface through the mesh representing the porous medium, the fluid interface representing a separation between a first fluid and a second fluid; and
   digitally simulating one or more residual amounts of the first fluid and the second fluid in one or more pore structures in the porous medium by:

   determining a first capillary pressure and a second capillary pressure for the porous medium;
   determining one or more values for one or more voxels in the mesh representing one or more locations in the porous medium associated with the one or more pore structures, the one or more values being based on the first and second capillary pressures and one or more porosity values for the one or more locations in the porous medium associated with the one or more pore structures; and
   determining the one or more residual amounts of the first fluid and the second fluid at the one or more voxels based on the one or more values.

2. The system of claim 1, wherein the one or more pore structures comprise one or more pores in the porous medium with a size smaller than a size of a voxel.

3. The system of claim 1, wherein the determining the one or more values for the one or more voxels in the mesh comprises using a constitutive relationship between capillary pressure and fluid saturation that uses the porosity values.

4. The system of claim 3, wherein the constitutive relationship is scaled using a similarity of a Leverett J-function.

5. The system of claim 1, wherein the operations further comprise reducing surface tension forces between the first fluid and the second fluid represented by the one or more voxels in the mesh by applying a counteracting body force to the one or more voxels based on properties of the first fluid and the second fluid.

6. The system of claim 5, wherein the properties of the second fluid comprise an average density and a maximum density between the first fluid and the second fluid.

7. The system of claim 1, wherein the operations further comprise digitally simulating the fluid flow in the one or more pore structures of the porous medium by applying a resistance force to the one or more voxels that represent the one or more locations of the one or more pore structures in the porous medium.

8. The system of claim 7, wherein the resistance force is applied to the one or more voxels in a direction based on a permeability of the porous medium.

9. The system of claim 8, wherein the direction is determined for each voxel based on principal axes of a Hessian matrix of the porosity of the location in the porous medium represented by each voxel.

10. A method for digitally simulating a multi-scale fluid flow in a three-dimensional computer-aided design (CAD) model of a simulation space, the method comprising:

reading, by a data processing system from a hardware storage device, a digital representation of a porous medium based on a digital three-dimensional CAD model, the digital representation including a mesh comprising a plurality of voxels;

digitally simulating, by the data processing system, movement of a fluid interface through the mesh representing the porous medium, the fluid interface representing a separation between a first fluid and a second fluid; and

digitally simulating, by the data processing system, one or more residual amounts of the first fluid and the second fluid in one or more pore structures in the porous medium by:

determining, by the data processing system, a first capillary pressure and a second capillary pressure for the porous medium;

determining, by the data processing system, one or more values for one or more voxels in the mesh representing one or more locations in the porous medium associated with the one or more pore structures, the one or more values being based on the first and second capillary pressures and one or more porosity values for the one or more locations in the porous medium associated with the one or more pore structures; and

determining, by the data processing system, the one or more residual amounts of the first fluid and the second fluid at the one or more voxels based on the one or more values.

11. The method of claim 10, wherein the one or more pore structures comprise one or more pores in the porous medium with a size smaller than a size of a voxel.

12. The method of claim 10, wherein the determining the one or more values for the one or more voxels in the mesh comprises using a constitutive relationship between capillary pressure and fluid saturation that uses the porosity values, optionally wherein the constitutive relationship is scaled using a similarity of a Leverett J-function.

13. The method of claim 10, further comprising reducing surface tension forces between the first fluid and the second fluid represented by the one or more voxels in the mesh by applying a counteracting body force to the one or more voxels based on properties of the first fluid and the second fluid.

14. The method of claim 10, further comprising:

digitally simulating the fluid flow in the one or more pore structures of the porous medium by applying a resistance force to the one or more voxels that represent the one or more locations of the one or more pore structures in the porous medium,

wherein the resistance force is applied to the one or more voxels in a direction based on a permeability of the porous medium, optionally wherein the direction is determined for each voxel based on principal axes of a Hessian matrix of the porosity of the location in the porous medium represented by each voxel.

15. One or more non-transitory machine-readable storage devices storing instructions for digitally simulating a multi-scale fluid flow in a three-dimensional computer-aided design (CAD) model of a simulation space, the instructions being executable by one or more processors, to cause performance of operations comprising the method of any one of claims 10 to 14.

System, 10

Server system, 12

Parallel computing system, 16

20

Memory, 18

Mesh preparation engine, 32

2D and 3D meshes

Interface

Network, 15

Simulation engine, 34

Collision interaction, 34a

Dynamic conversion, 34b

Boundary processing, 34c

Advection operations, 34d

Process Module, 50

Data Repository, 38

Coordinate systems

libraries

Client System, 14

User supplied mesh definition, 30

CAD generated drawing, 31

Bus System, 22

Processing device, 24

FIG. 1

FIG. 2

FIG. 3A

FIG. 3B

400

Read, from memory, a digital representation of a mesh representing a porous medium based on a digital three-dimensional CAD model — 402

↓

Digitally simulate movement of a fluid interface through the mesh, the fluid interface representing a separation between a first fluid and a second fluid — 404

↓

Reduce surface tension forces between the first fluid and the second fluid` by applying a counteracting body force to one or more voxels of the mesh based on properties of the second fluid — 406

↓

Apply a resistance force to one or more voxels that represent one or more locations of one or more pore structures in the porous medium — 408

↓

Digitally simulate residual amounts of a first fluid in one or more pore structures in the porous medium — 410

↓

Determine a first capillary pressure and a second capillary pressure for the porous medium — 412

↓

Determine one or more values for one or more voxels in the mesh based on the first and second capillary pressures and one or more porosity values — 414

↓

Determine the one or more residual amounts of the first fluid at the one or more voxels based on the one or more values — 416

# FIG. 4

EP 4 675 491 A1

FIG. 5

600

602

604

604

FIG. 6

FIG. 7A    FIG. 7C    FIG. 7E    FIG. 7G

FIG. 7B    FIG. 7D    FIG. 7F    FIG. 7H

EP 4 675 491 A1

800

Read, from memory, a digital representation of a mesh representing a porous medium based on a digital CAD model ⟋ 802

Apply a resistance force to one or more voxels that represent one or more locations of one or more pore structures in the porous medium ⟋ 804

Digitally simulate fluid flow through the mesh ⟋ 806

# FIG. 8

FIG. 9A

FIG. 9B

FIG. 9C

Europäisches
Patentamt

European
Patent Office

Office européen
des brevets

# EUROPEAN SEARCH REPORT

**Application Number**

EP 25 18 6905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PEREIRA G G: "Fluid flow, relative permeabilities and capillary pressure curves through heterogeneous porous media", APPLIED MATHEMATICAL MODELLING, GUILDFORD, GB, vol. 75, 31 May 2019 (2019-05-31), pages 481-493, XP085790128, ISSN: 0307-904X, DOI: 10.1016/J.APM.2019.05.050 [retrieved on 2019-05-31] * abstract * * page 481 - page 492 * * figures 7-9 * ----- | 1-15 | INV. G06F30/28 E21B43/00 E21B49/00 G06F30/23 ADD. G06F111/10 G06F113/08 |
| X | US 2022/207219 A1 (OTOMO HIROSHI [US] ET AL) 30 June 2022 (2022-06-30) * abstract * * paragraph [0001] - paragraph [0011] * * paragraph [0032] - paragraph [0041] * * paragraph [0046] - paragraph [0085] * ----- | 1-15 | |
| X | SAJJAD FOROUGHI ET AL: "Incorporation of Sub-Resolution Porosity Into Two-Phase Flow Models With a Multiscale Pore Network for Complex Microporous Rocks", WATER RESOURCES RESEARCH, AMERICAN GEOPHYSICAL UNION, US, vol. 60, no. 4, 15 April 2024 (2024-04-15) , page n/a, XP072626287, ISSN: 0043-1397, DOI: 10.1029/2023WR036393 * abstract * * page 1 - page 8 * ----- -/-- | 1-15 | TECHNICAL FIELDS SEARCHED (IPC) G06F E21B |

The present search report has been drawn up for all claims

| Place of search | Date of completion of the search | Examiner |
|---|---|---|
| Munich | 19 November 2025 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

Application Number

EP 25 18 6905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEFNY MAHMOUD ET AL: "Synchrotron-based pore-network modeling of two-phase flow in Nubian Sandstone and implications for capillary trapping of carbon dioxide", INTERNATIONAL JOURNAL OF GREENHOUSE GAS CONTROL, ELSEVIER, AMSTERDAM, NL, vol. 103, 12 October 2020 (2020-10-12), XP086370016, ISSN: 1750-5836, DOI: 10.1016/J.IJGGC.2020.103164 [retrieved on 2020-10-12] * abstract * * page 2 - page 13 * ----- | 1-15 | |
| X | EP 3 789 583 A1 (DASSAULT SYSTEMES SIMULIA CORP [US]) 10 March 2021 (2021-03-10) * abstract * * paragraph [0001] - paragraph [0007] * * paragraph [0014] * * paragraph [0018] - paragraph [0024] * * paragraph [0038] - paragraph [0062] * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 19 November 2025 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                     

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 6905

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2025

| Patent document cited in search report | | Publication date | Patent family member(s) | | Publication date |
|---|---|---|---|---|---|
| US 2022207219 | A1 | 30-06-2022 | CN | 114692518 A | 01-07-2022 |
| | | | EP | 4024260 A1 | 06-07-2022 |
| | | | JP | 7748278 B2 | 02-10-2025 |
| | | | JP | 2022104831 A | 11-07-2022 |
| | | | US | 2022207219 A1 | 30-06-2022 |
| EP 3789583 | A1 | 10-03-2021 | CN | 112446176 A | 05-03-2021 |
| | | | EP | 3789583 A1 | 10-03-2021 |
| | | | JP | 7489571 B2 | 24-05-2024 |
| | | | JP | 2021038646 A | 11-03-2021 |
| | | | US | 2021062638 A1 | 04-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63667189
- US 11907625 B
- US 5848260 A
- US 11847391 B